# EUROPEAN PATENT APPLICATION

(11) **EP 1 489 386 A1**
(43) Date of publication of application: **22.12.2004**
(21) Application number: 03291444.2
(22) Date of filing: 16.06.2003
(51) Int. Cl.: G01D 5/165, H01H 1/60, H01H 19/58

(54) **Rotary position sensor**

(71) Applicant: VALEO SYSTEMES D'ESSUYAGE, 78321 La Verrière (FR)
(72) Inventor: Lorin, Hervé, 86000 Poitiers (FR); Saussele, Werner, 74354 Besigheim (DE)

(57) **Abstract**

In a rotary position sensor contact grease may be used without the risk of failure in contact making al very low temperatures. The rotary position sensor has a contact disk (16) driven in rotation about an axis (18). The sensor comprises a set of electrically conductive contact tracks (20, 22, 24) extending concentrically the axis on a face of the contact disk (16). A set of contact members (26, 28, 30) are held stationary opposite the contact disk (16) face in sliding engagement with the contact tracks. The contact tracks (20, 22, 24) are covered with a thin layer of contact grease, and a scraper member (32) is slidingly engaged with the contact tracks. Due to the action of the scraper member (32), the contact tracks are only covered with a thin film of contact grease that is safely penetrated by the contact members even in a state of high viscosity.

## Description

The present invention relates to a rotary position sensor associated with a contact disk driven in rotation about an axis, in particular for a vehicular wiper drive.

A conventional wiper drive for vehicles comprises an electric motor with a reduction gear and an output shaft. The output shaft is connected to a gear wheel that carries a rotary contact disk. The contact disk has a face with plural concentric contact tracks thereon for cooperation with corresponding stationary sliding contact members. The contact disk in combination with the contact members provides sensor signals indicative of the current rotational positions of the output shaft and, in particular, of a rotational position corresponding to the wiper parking position.

To reduce wear of the contact tracks and of the contact members, the use of a suitable contact grease may be contemplated. It has been found, however, that the contact grease may cause failure of contact making at very low temperatures due to its increasing viscosity.

The present invention provides a rotary position sensor wherein contact grease may be used without the risk of failure in contact making. Specifically, the rotary position sensor of the invention is associated with a contact disk driven in rotation about an axis. The sensor comprises a set of electrically conductive contact tracks extending concentrically the axis on a face of the contact disk. A set of contact members are held stationary opposite the contact disk face in sliding engagement with the contact tracks. The contact tracks are covered with a thin layer of contact grease, and a scraper member is slidingly engaged with the contact tracks. Due to the action of the scraper member, the contact tracks are only covered with a thin film of contact grease that is safely penetrated by the contact members even in a state of high viscosity. The scraper member may accumulate on its upstream flank an amount of grease sufficient to compensate for any loss of substance over the life of the sensor.

In the preferred embodiment, the contact disk face is provided with a plurality of concentric circular grooves and the contact tracks are located at the bottoms of the grooves. A scraper finger is resiliently engaged in each groove. A further improvement is achieved in that the contact members and the scraper fingers are arranged on a carrier wall facing the contact disk. The carrier wall has a plurality of concentric ribs substantially complementary in cross-sectional shape with the grooves of the contact disk, and the concentric ribs and the grooves of the contact disk are inter-engaged without contacting each other. With this structure, each contact member with the associated contact track and scraper finger forms an independent sensor system with an amount of contact grease confined within a groove.

Further advantages and features of the invention will become apparent from the following detailed description with reference to the appending drawings. In the drawings:
- Figure 1 is a sectional view of a contact disk in a first embodiment of a rotary position sensor;
- Figure 2 is a plan view of the contact disk;
- Figure 3 is a perspective view of a stationary contact arrangement in a second embodiment of a rotary position sensor;
- Figure 4 is an exploded view of the arrangement in Fig. 3; and
- Figure 5 is a sectional view of the rotary position sensor;
- Figure 6 is a plan view of a contact plate for incorporation into a contact disk;
- Figure 7 is a perspective view of a contact carrier disk with two sets of integrally molded scraper fingers in a further embodiment; and
- Figure 8 is a sectional view of the sensor according to the further embodiment.

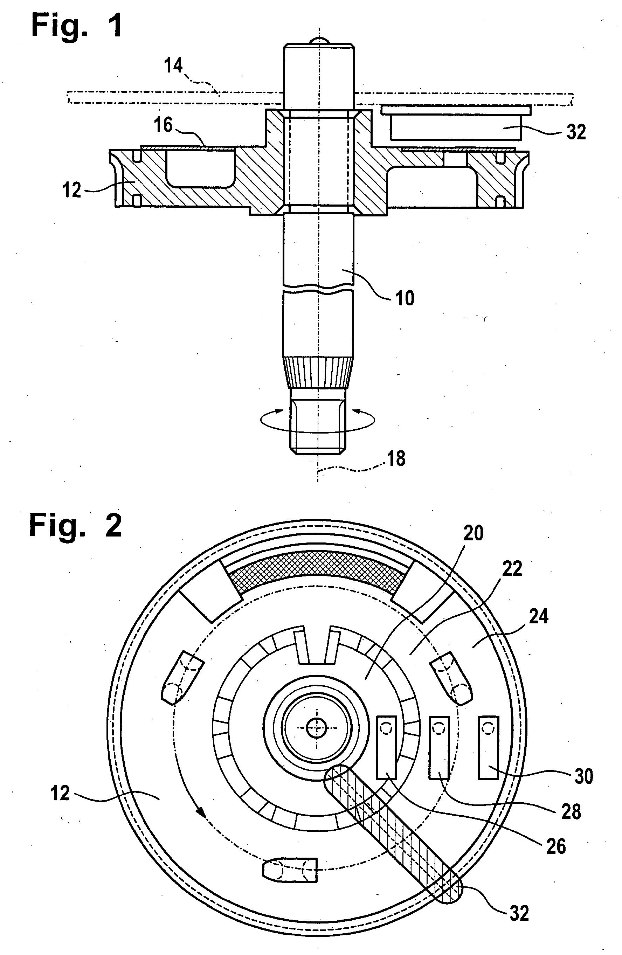

With reference to Fig. 1, an output shaft 10 of a vehicular wiper drive carries a drive wheel 12 which is part of a reduction gear of the wiper drive (not shown). Output shaft 10 and drive wheel 12 are accommodated within a gear box of which only a cover 14 is shown in Figure 1. A contact disk 16 is assembled with drive wheel 12 for joint rotation about the axis 18 of output shaft 10. The contact disk 16 is mounted on the face of drive wheel 12 opposite cover 14.

As seen in Fig. 2, contact disk 16 is provided with a plurality of concentric circular contact tracks 20, 22 and 24. Each contact track 20, 22, 24 is associated with a corresponding stationary contact member 26, 28, 30 shaped as a leaf spring. Contact members 26, 28, 30 are attached to cover 14 and have their free ends in sliding engagement with a corresponding one of the contact tracks 20, 22, 24.

Although not seen in the drawings, the contact tracks 20, 22, 24 are covered with a thin layer of a contact grease. A scraper blade 32 extends substantially radially across contact tracks 20, 22, 24 in sliding engagement with each of the tracks. Scraper blade 32 is also attached to cover 14. By the provision of scraper blade 32, the thickness of the contact grease layer on the contact tracks is reduced to that of a film. Accordingly, the contact members 26, 28, 30 can easily penetrate the thin layer of contact grease to make a safe electrical contact with the corresponding contact track 20, 22, 24 even when the contact grease is in a condition of high viscosity due to very low temperatures such as -40°C, for example. On the upstream side of scraper blade 32, an amount of contact grease will accumulate. The accumulated amount of contact grease on the upstream side of scraper blade 32 constitutes a reserve to compensate for any loss of contact grease that might occur over the life of the wiper drive.

The arrangement shown in Figures 1 and 2 constitutes a rotary position sensor for detecting particular rotational positions of the drive wheel 12. One of the rotational positions of drive wheel 12 that needs to be detected is the wiper parking position. In order to generate the appropriate sensor signals, the outer contact tracks 22, 24 have alternating conductive and non-conductive areas in the circumferential direction, and the inner contact track 20 is a continuous conductive ring. The conductive areas of all contact tracks 20, 22, 24 are all electrically connected with each other.

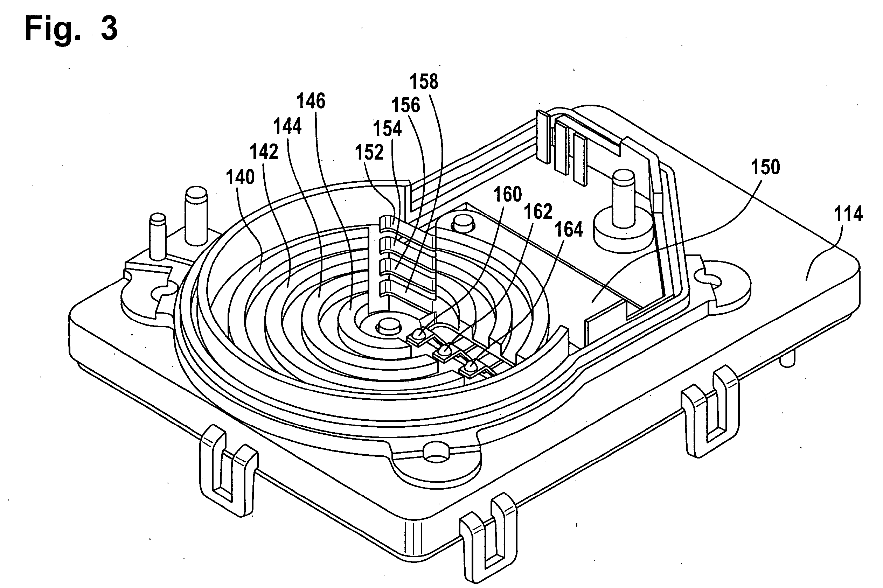

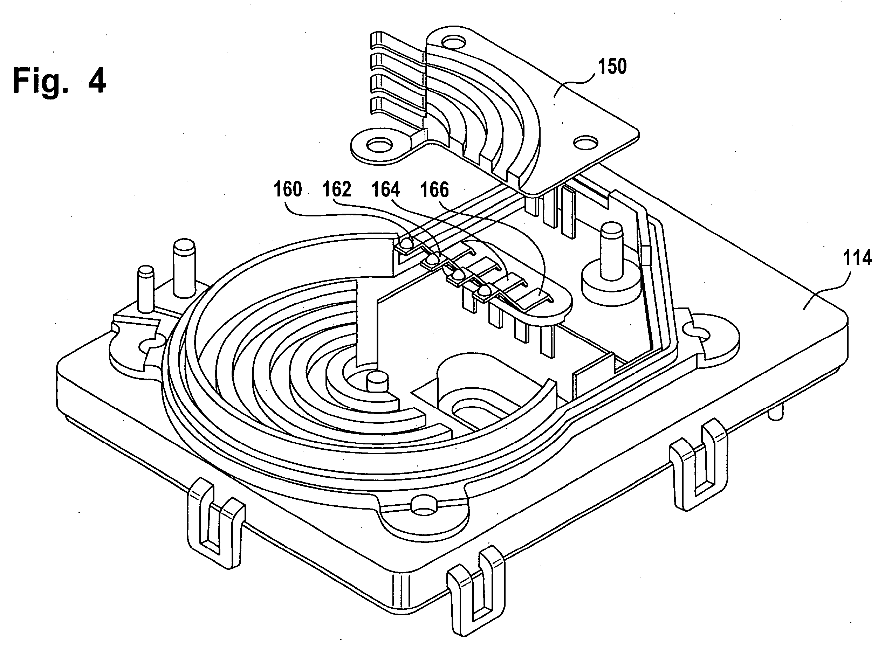

In the embodiment shown in Figs. 3, 4 and 5, a gear box (not shown) has a top cover 114 with concentric rib structures molded on the internal surface facing contact disk 116. Specifically, as seen in Figs. 3 and 4, four concentric ribs 140, 142, 144 and 146 are radially spaced from each other and extend in a circumferential direction across an angle of about 225°. Ribs 140, 142, 144 and 146 each have a substantially rectangular cross-sectional shape. In the remaining sector that extends circumferentially across about 135°, a base member 150 with four scraper fingers 152, 154, 156 and 158 and a set of contact members 160, 162, 164 and 166 are inserted. Scraper fingers 152 to 158 extend from the bottoms of partial ribs formed with base member 150 and aligned with corresponding ones of the ribs 140 to 146. Scraper fingers 152 to 158 are also generally aligned with ribs 140 to 146 in the circumferential direction, but are slightly shifted radially outwardly. As seen in Fig. 4, the set of contact members 160 to 166 has a common contact holder 170 accommodated in a corresponding recess of cover 114, and the base member 150 is also matingly accommodated in a corresponding recess of cover 114.

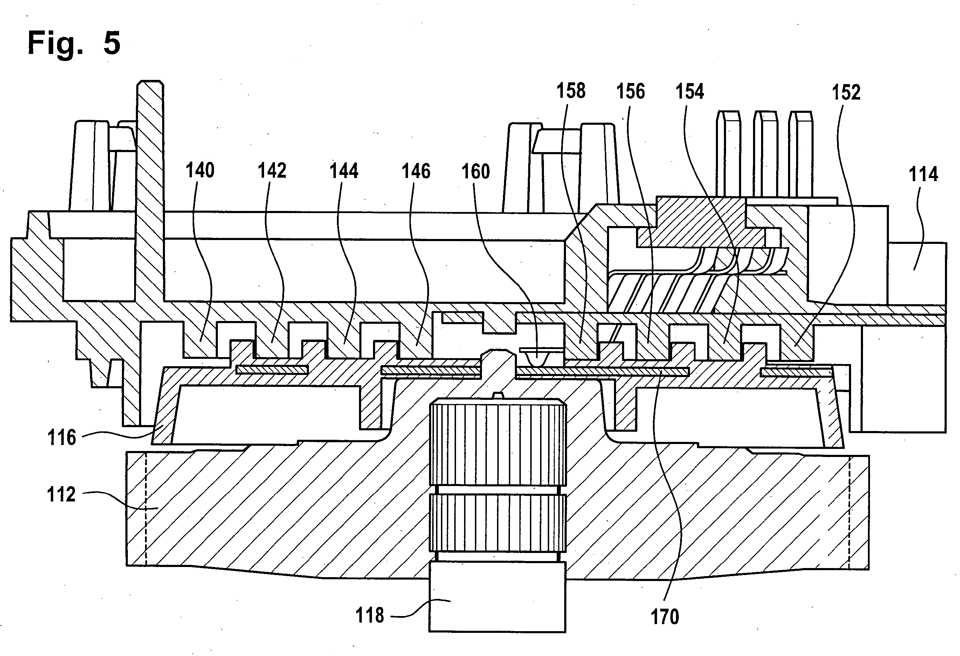

With reference to Fig. 5, contact disk 116 on its side facing cover 114 has a groove structure generally complementary to the rib structure of cover 114. Each of the ribs 140 to 146 extends into a corresponding groove on the opposite face of contact disk 116, except for the circumferential area occupied by scraper fingers 152 to 158, by the partial ribs of base member 150 and by the contact members 160 to 166. In this area, the scraper fingers 152 to 158 and the contact members 160 to 166 extend into the grooves of contact disk 116. The free ends of scraper fingers 152 to 158 are resiliently engaged with the bottom surfaces of corresponding grooves of contact disk 116, and the contact members 160 to 166 are also slidingly and resiliently engaged with the bottom surfaces of corresponding grooves of contact disk 116.

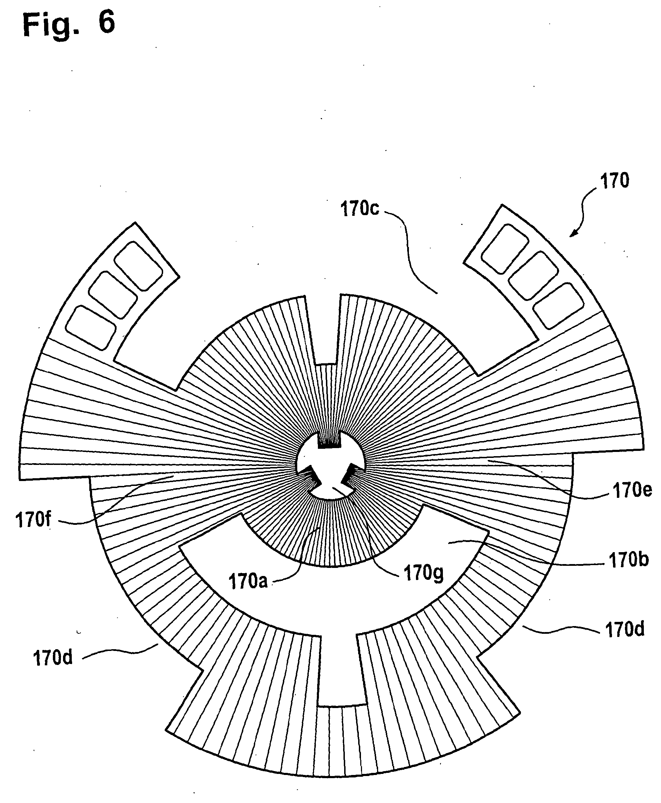

Contact disk 116 is formed by a punched or stamped metallic contact plate 170 over-molded with an insulating plastic material. An example of contact plate 170 is shown in Fig. 6. Contact plate 170 has a continuous annular central hub 170a, a number of arcuate recesses 170b, 170c and 170d and a pair of radial connecting arms 170e and 170f. The hub portion 170a has a central engagement opening 170g with a clip structure for attachment to drive wheel 112. Contact plate 170 has multiple radial streaks circumferentially spaced from each other by just a few degrees. The purpose of these radial streaks is to break any filament that could possibly be created by some sharp edge scraping over the contact surface.

As in the first embodiment, a thin layer of contact grease is provided over the contact tracks formed by contact plate 170. Scraper fingers 152 to 158 ensure that the thickness of the contact grease layer is reduced to that of a film. Since each contact track is located at the bottom of a groove and the associated contact member and scraper finger are also located in the same groove, each sensor contact pair is independent from all other contact pairs and the inter-engaging rib and wall structures of the contact disk 116 and of the cover 114 constitute an efficient bar against radial movement of any material, including contact grease and possible metallic filaments, so that reliable contact breaking and making functions are always ensured.

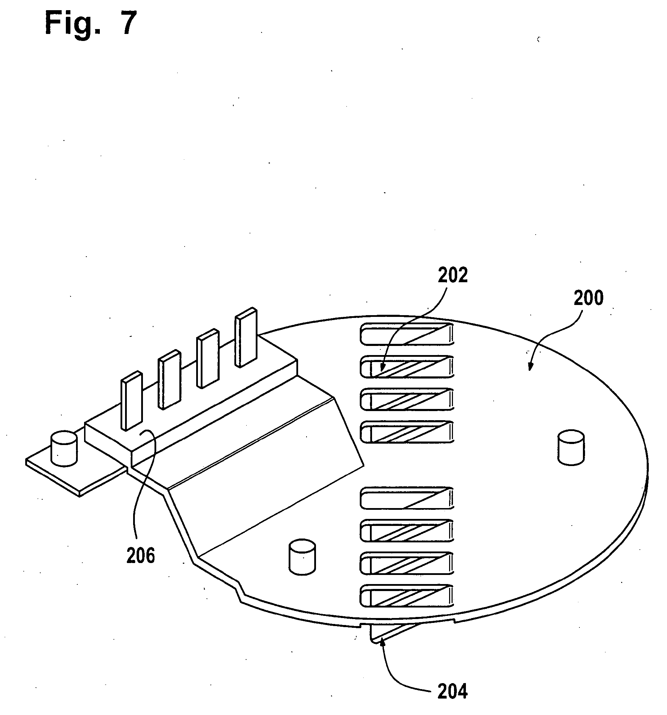

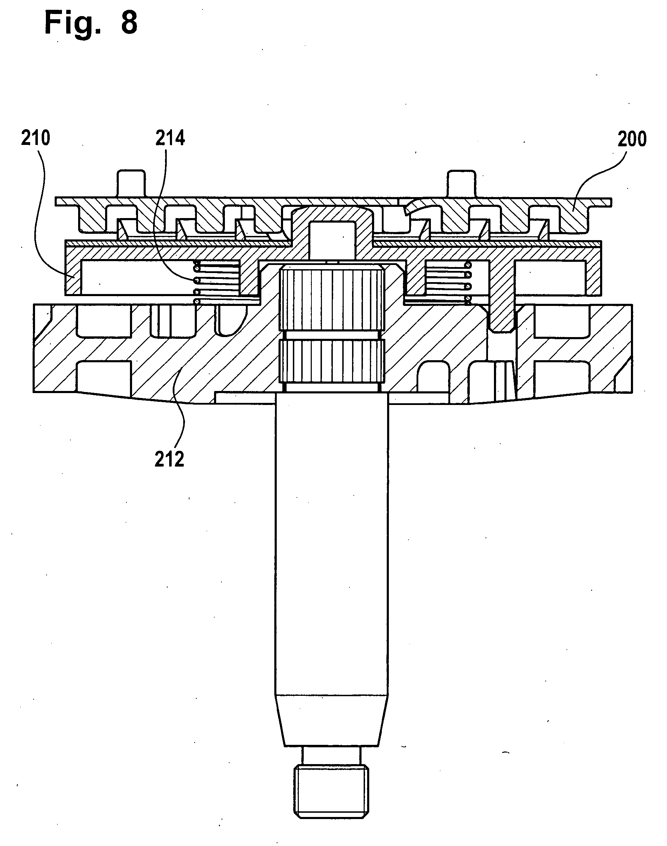

In a further embodiment, as shown in Figs. 7 and 8, a generally circular carrier disk 200 is integrally molded from plastics with two sets of scraper fingers, 202 and 204, aligned on a diametrical line. A contact carrier block 206 is also integrally molded with the carrier disk 200.

With reference to Fig. 8, a contact disk 210 similar to contact disk 116 in the former embodiment is mounted on drive wheel 212 for joint rotation but with a limited axial movement. A pressure spring 214 is mounted between drive wheel 212 and contact disk 210 to urge contact disk against carrier disk 200. Other arrangements are similar to the former embodiment.

## Claims

1. A rotary position sensor associated with a contact disk driven in rotation about an axis, in particular for a vehicular wiper drive, comprising a set of electrically conductive contact tracks extending concentrically about said axis on at least one face of said contact disk and a set of contact members held stationary opposite said contact disk face in sliding engagement with said contact tracks, **characterized in that** said contact tracks are covered with a thin layer of contact grease, and a scraper member is slidingly engaged with said contact tracks.

2. The rotary position sensor of claim 1, wherein said scraper member is a scraper blade extending substantially radially across said contact tracks.

3. The rotary position sensor of claim 1, wherein said contact disk face is provided with a plurality of concentric circular grooves and the contact tracks are located at the bottoms of said grooves, and in that a scraper finger is resiliently engaged in each groove.

4. The rotary position sensor of claim 3, wherein said grooves are defined by circular ribs.

5. The rotary position sensor according to claims 3 and 4, wherein said contact members and said scraper fingers are arranged on a carrier wall facing said contact disk, and the carrier wall has a plurality of concentric ribs substantially complementary in cross-sectional shape with the grooves of said contact disk, the concentric ribs and the grooves of the contact disk being inter-engaged without contacting each other.

6. The rotary position sensor of claim 5, wherein said grooves and ribs have substantially rectangular cross-sections.

7. The rotary position sensor of claim 5 or claim 6, wherein said scraper fingers are aligned with said ribs on the carrier wall.

8. The rotary position sensor of claim 7, wherein said scraper fingers are integrally molded with a common base member that fits in a recessed sector of the concentric ribs on the carrier wall.

9. The rotary position sensor of claim 8, wherein partial ribs are also integrally molded with the base member, each partial rib with an associated scraper finger substantially filling a peripheral gap in said recessed sector.

10. The rotary position sensor of claim 9, wherein said partial ribs are slightly radially shifted with respect to associated scraper fingers.

11. The rotary position sensor according to any of claims 5 to 10, wherein said carrier wall is formed on a top cover.

12. The rotary position sensor according to any of claims 5 to 10, wherein said carrier wall is formed by a contact carrier disk.

13. The rotary position sensor of claim 12, wherein the contact carrier disk has tow sets of integrally molded scraper fingers.

14. The rotary position sensor of claim 13, wherein the sets of scraper fingers are aligned on a diametrical line of the carrier disk.

15. The rotary position sensor according to any of claims 1 to 14, wherein said contact disk is formed of a punched metal plate over-molded with a plastics material.

16. The rotary position sensor of claim 15, wherein said punched metal plate has a contact surface with multiple radial chip breaker streaks therein.

17. The rotary position sensor of claim 16, wherein said contact disk has a surface structure with multiple chip catcher asperities.

18. The rotary position sensor according to any of claims 1 to 17, wherein said contact disk is assembled with a drive wheel and locked with the drive wheel for joint rotation.

19. The rotary position sensor according to claims 15 and 18, wherein said metal plate is shaped with a central clip structure for attachment on a drive wheel.

20. The rotary position sensor according to any of claims 1 to 19, wherein said contact disk is assembled with a drive wheel and locked with the drive wheel for joint rotation.

21. The rotary position sensor of claim 20, wherein the contact disk is assembled with the drive wheel for a limited axial movement and a pressure spring is mounted between the drive wheel and the contact disk.
